**Europäisches Patentamt**

**European Patent Office**

**Office européen des brevets**

(19)

(11) Veröffentlichungsnummer: **0 236 669**
**B1**

# EUROPÄISCHE PATENTSCHRIFT

(12)

(45) Veröffentlichungstag der Patentschrift:
**19.07.89**

(21) Anmeldenummer: **87100129.3**

(22) Anmeldetag: **08.01.87**

(51) Int. Cl.⁴: **C21B 13/00,** C21B 13/12,
C21B 13/14

(54) **Verfahren zur Herstellung von flüssigem Roheisen oder Stahlvormaterial.**

(30) Priorität: **05.02.86 DE 3603894**

(43) Veröffentlichungstag der Anmeldung:
**16.09.87 Patentblatt 87/38**

(45) Bekanntmachung des Hinweises auf die Patenterteilung:
**19.07.89 Patentblatt 89/29**

(84) Benannte Vertragsstaaten:
**FR GB IT LU SE**

(56) Entgegenhaltungen:
**EP-A- 0 111 176**
**EP-A- 0 143 102**
**EP-B- 0 010 627**
**EP-B- 0 037 809**
**DD-A- 229 714**
**DE-A- 3 441 985**

(73) Patentinhaber: **DEUTSCHE VOEST-ALPINE INDUSTRIEANLAGENBAU GMBH, Neusser Strasse 111, D-4000 Düsseldorf 1(DE)**

(72) Erfinder: **Hauk, Rolf, Dr., Friedrichstrasse 45, D-4000 Düsseldorf 1(DE)**

(74) Vertreter: **Pfenning, Meinig & Partner, Mozartstrasse 17, D-8000 München 2(DE)**

## Beschreibung

Die Erfindung betrifft ein Verfahren gemäß dem Oberbegriff des Anspruchs I.

Aus der EP O O37 8O9 BI ist ein Verfahren zur Herstellung von flüssigem Roheisen oder Stahlvormaterial aus eisenoxidhaltigen Rohstoffpartikeln, insbesondere vorreduziertem Eisenerz bekannt, bei dem die eisenoxidhaltigen Rohstoffpartikel in ein aus Kohleteilchen und einem sauerstoffhaltigen Trägergas gebildetes Wirbelbett von oben eingebracht und bei Durchwandern desselben erhitzt, reduziert und aufgeschmolzen werden. Um bei diesem Verfahren eine günstige Energieausnutzung und damit einen geringen Gesamtenergieeinsatz zu erreichen, soll dem Wirbelbett durch Plasmaheizung zusätzlich Energie zugeführt werden, wobei die Plasmaheizung im oberen und/oder daran anschließenden mittleren Bereich des Wirbelbettes erfolgt und dort eine Zone mit höchster Temperatur des Wirbelbettes erzeugt und aufrechterhalten wird. Hierzu sind in Höhe des Wirbelbettes in der Wand des das Wirbelbett aufnehmenden Schmelzgefäßes Plasmabrenner eingesetzt, die im oberen und/oder mittleren Höhenbereich des vom Wirbelbett ausgefüllten Raumes des Schmelzgefäßes angeordnet sind. Die zusätzliche Energieeinbringung durch Plasmaheizung soll ermöglichen, infolge der vorwiegend durch Strahlung erfolgenden Energieübertragung, bedingt durch die hohe Temperatur des Plasmagases, den Gesamtenergieeinsatz bedeutend abzusenken. Dadurch, daß die Plasmaheizung im oberen und/oder daran anschließenden mittleren Bereich des Wirbelbettes erfolgt, soll dort eine Zone mit höchster Temperatur des Wirbelbettes erzeugt und aufrechterhalten werden, wodurch die Temperatur knapp oberhalb der Schlackenbadoberfläche relativ niedrig gehalten und eine Reoxidation der ausreduzierten und bereits aufgeschmolzenen Eisenerzpartikel knapp vor Durchtritt durch das Schlackenbad vermieden werden soll.

Es hat sich jedoch gezeigt, daß das Einbringen von Plasmaenergie in den oberen und/oder mittleren Bereich des Wirbelbettes durch entsprechende Anordnung der Plasmabrenner nicht zu einer Übertragung dieser Energie in die Schmelzzone führt, sondern nur die Temperatur des aus dem Wirbelbett bzw. dem Schmelzgefäß austretenden Gases erhöht. Die Schmelzzone befindet sich dagegen oberhalb der flüssigen Schlackenschicht im Bereich der Ebene, in die durch seitlich in der Wand des Schmelzgefäßes angebrachte Düsen das sauerstoffhaltige Trägergas strömt. In dieser Zone wird die Plasmaenergie nicht wirksam, so daß eine bessere Energieausnutzung und eine Absenkung des Gesamtenergieeinsatzes tatsächlich nicht erreicht werden. Andererseits hat sich auch gezeigt, daß eine Reoxidation der ausreduzierten und bereits aufgeschmolzenen Eisenerzpartikel vor den Einblasdüsen für das Trägergas auch bei hohen Schmelztemperaturen praktisch nicht auftritt.

Es ist daher die Aufgabe der vorliegenden Erfindung, das bekannte Verfahren in der Weise zu verbessern, daß die zugeführte Gesamtenergie effektiver genutzt wird.

Diese Aufgabe wird erfindungsgemäß gelöst durch das im kennzeichnenden Teil des Anspruchs I angegebene Merkmal. Vorteilhafte Weiterbildungen des erfindungsgemäßen Verfahrens ergeben sich aus den Unteransprüchen.

Die Erfindung zeichnet sich dadurch aus, daß die Plasmaenergie in Höhe des Eintritts des sauerstoffhaltigen Trägergases in das Wirbelbett zugeführt wird.

Es ist vorteilhaft, das das Wirbelbett bildende sauerstoffhaltige Trägergas selbst als plasmabildendes Gas zu verwenden. Dies führt bei relativ einfachem Aufbau des Schmelzgefäßes zu einer optimalen Ausnutzung des Trägergases. Wenn die eisenoxidhaltigen Rohstoffpartikel in einem Reduktionsaggregat vorreduziert wurden, besteht eine besonders ökonomische Verfahrensweise darin, das aus dem Reduktionsaggregat abgeführte Prozeßgas nach einer Entstaubung sowie einem $H_2O$- und $CO_2$- Entzug als plasmabildendes Gas zu verwenden. Dieses aufbereitete Prozeßgas kann auch zusätzlich zum sauerstoffhaltigen Trägergas über Plasmabrenner oder $O_2$-Brenner oberhalb des Eintritts des Trägergases in das Wirbelbett zugeführt werden.

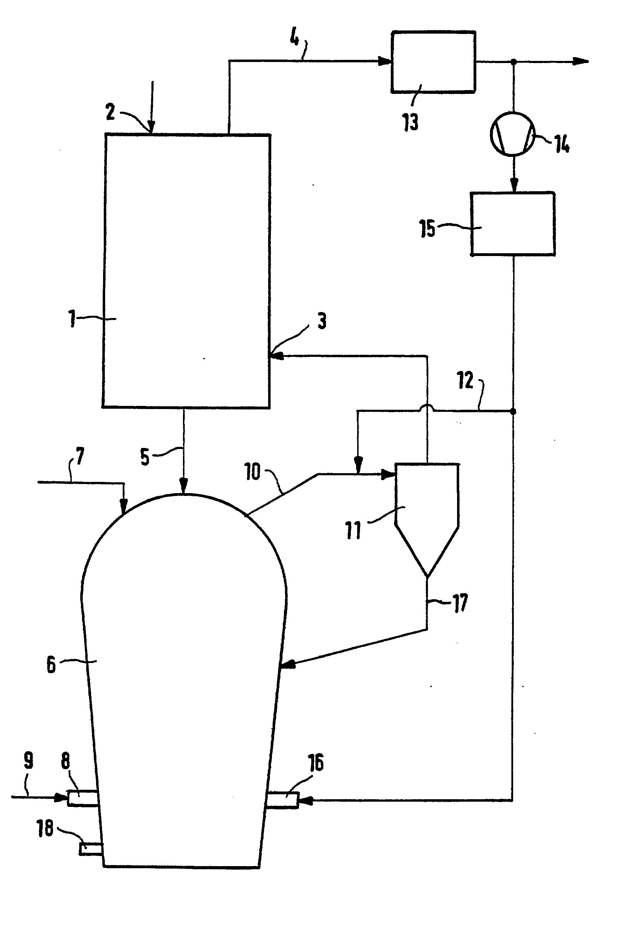

Die Erfindung wird im folgenden anhand eines in der Figur dargestellten Ausführungsbeispiels näher erläutert. Diese zeigt eine schematische Darstellung einer Anlage zur Reduzierung von Eisenerz zu flüssigem Roheisen oder Stahlvormaterial.

In einen Reduktionsschachtofen I wird von oben her über einen Einlaß 2 vorzugsweise stückiges Eisenerz eingegeben. Im unteren Teil des Reduktionsschachtofens I wird über vorzugsweise kreisförmig angeordnete Einlässe 3 Reduktionsgas zugeführt. Das Reduktionsgas steigt im Schachtofen I auf und reduziert das im Gegenstrom nach unten sinkende Eisenerz. Am oberen Ende des Schachtofens I wird das Prozeßgas, das durch die Reduktion des Eisenerzes einen erheblichen Anteil an $CO_2$ und $H_2O$ enthält, über eine Leitung 4 abgezogen. Das vorzugsweise auf einen Eisengehalt zwischen 45 % und 95 % vorreduzierte Eisenerz wird als Eisenschwamm über eine Leitung 5 aus dem Bodenbereich des Schachtofens I abgezogen. Der Eisenschwamm wird durch die Leitung 5 von oben in einen Einschmelzvergaser 6 eingegeben. Zusätzlich wird im Kopfbereich des Einschmelzvergasers 6 über eine Leitung 7 fein- bis grobkörnige Kohle zugeführt.

Über in gleicher Höhe über den Umfang des Einschmelzvergasers 6 verteilte Plasmabrenner 8 wird aus einer Leitung 9 Sauerstoff oder sauerstoffhaltiges Gas als Trägergas in den Einschmelzvergaser 6 eingeblasen. Die Plasmabrenner 8 befinden sich im unteren Bereich des Einschmelzvergasers 6 und das aufsteigende Trägergas bildet mit dem Eisenschwamm und der Kohle ein Wirbelbett. In diesem wird die Kohle durch den Sauerstoff vergast. Das aus dem Einschmelzvergaser 6 austretende, CO- und $H_2O$-haltige Gas wird über eine Leitung IO zu einem Zyklon II geleitet, in dem es von mitgenommenen Feststoffteilchen, wie Kohle und Asche, befreit wird. Das aus dem Zyklon II austretende Gas wird über die Einlässe 3 in den Schachtofen I eingeblasen und dient als Reduktionsgas für das Eisenerz.

Das aus dem Einschmelzvergaser 6 austretende Gas hat eine Temperatur von etwa 1050° C. Die geeignete Temperatur des Reduktionsgases liegt jedoch bei ca. 850° C. Aus diesem Grund mündet in die Leitung 10 eine Leitung 12, über die Kühlgas zugeführt wird, derart, daß das in den Zyklon 11 eintretende Gas eine Temperatur von 850° C hat. Das Kühlgas wird aus dem aus dem Schachtofen 1 abgeführten Prozeßgas gewonnen. Dieses gelangt über die Leitung 4 zunächst in einen Wäscher 13, der es weitgehend von Staub und $H_2O$ befreit, anschließend in einen Verdichter 14 und schließlich in einen $CO_2$-Wäscher 15, in dem das $CO_2$ aus dem Gas entfernt wird. Ein Teil dieses aufbereiteten Prozeßgases dient als Kühlgas für das Reduktionsgas, während der restliche Teil als plasmabildendes Gas für mindestens einen weiteren Plasmabrenner 16 verwendet wird. Dieser Plasmabrenner 16 kann in gleicher Höhe oder etwa oberhalb der Plasmabrenner 8 angeordnet sein. Es wird nur so viel Prozeßgas aufbereitet, wie als Kühlgas für das Reduktionsgas und als plasmabildendes Gas benötigt wird. Der überschüssige Teil des Prozeßgases wird hinter dem Wäscher 13 abgezweigt und einer anderen Verwendung zugeführt.

Die im Zyklon 11 ausgeschiedenen Feststoffpartikel werden über eine Leitung 17 in den Einschmelzvergaser 6 in Höhe des Wirbelbettes zurücktransportiert. Auch hier kann die Eingabe in den Einschmelzvergaser 6 über nicht dargestellte Plasmabrenner erfolgen. Im Bodenbereich des Einschmelzvergasers 6 befinden sich Abstichöffnungen 18 für die flüssige Schlacke sowie das geschmolzene Roheisen.

Durch die Zuführung der Plasmaenergie in den unteren Teil des Wirbelbettes ist sichergestellt, daß diese Energie vollständig zum Schmelzen des Eisenschwamms verwendet wird. Es ist auch sichergestellt, daß der geschmolzene Eisenschwamm bzw. das geschmolzene Roheisen im unteren Teil des Wirbelbettes nicht wieder abkühlt, wie bei einer Anordnung der Plasmabrenner im oberen oder mittleren Bereich des Wirbelbettes befürchtet werden muß. Es wird somit eine ideale Temperaturverteilung über die Höhe des Wirbelbettes erzielt, so daß eine größtmögliche Energieausnutzung stattfindet.

Eine zusätzliche Steuerung der Temperaturverteilung kann dadurch erreicht werden, daß man dem Einschmelzvergaser 6 über die Plasmabrenner Kohlenstoffträger in fester und/oder flüssiger und/oder gasförmiger Form zuführt. Der energiesparende Betrieb des Einschmelzvergasers zeigt sich beispielsweise daran, daß bei Verwendung von Gasflammkohle deren Verbrauch bei etwa 500 kg/t Roheisen liegt, während dieser etwa 1000 kg/t Roheisen beträgt, wenn keine Plasmabrenner eingesetzt sind und auch keine Prozeßgasrückführung stattfindet.

**Patentansprüche**

1. Verfahren zur Herstellung von flüssigem Roheisen oder Stahlvormaterial aus eisenoxidhaltigen Rohstoffpartikeln, bei dem diese in ein aus kohlenstoffhaltigen Feststoffteilchen und einem sauerstoffhaltigen Trägergas gebildetes Wirbelbett von oben eingebracht und bei Durchwandern desselben erhitzt, reduziert und aufgeschmolzen werden und bei dem das Wirbelbett durch Plasmaheizung zusätzlich Energie erhält, **dadurch gekennzeichnet,,** daß die Plasmaenergie in Höhe des Eintritts des sauerstoffhaltigen Trägergases in das Wirbelbett zugeführt wird.

2. Verfahren nach Anspruch 1, dadurch gekennzeichnet, daß das sauerstoffhaltige Trägergas als plasmabildendes Gas verwendet wird.

3. Verfahren nach Anspruch 1 oder 2, dadurch gekennzeichnet, daß die eisenoxidhaltigen Rohstoffpartikel in einem Reduktionsaggregat (1) vorreduziert wurden und daß das aus dem Reduktionsaggregat (1) abgeführte Prozeßgas nach einer Entstaubung sowie einem $H_2O$- und $CO_2$-Entzug als plasmabildendes Gas verwendet wird.

4. Verfahren nach Anspruch 3, dadurch gekennzeichnet, daß das entstaubte und von $H_2O$ - $CO_2$ befreite Prozeßgas über zusätzliche Plasmabrenner (16) oder $O_2$-Brenner in Höhe oder oberhalb des Eintritts des sauerstoffhaltigen Trägergases in das Wirbelbett geführt wird.

5. Verfahren nach einem der Ansprüche 1 bis 4, dadurch gekennzeichnet, daß das aus dem Wirbelbett abgeführte Gas in einem Zyklon (11) entstaubt und der so abgeschiedene Staub über Brenner in die Wirbelschicht zurückgeführt wird.

6. Verfahren nach Anspruch 5, dadurch gekennzeichnet, daß der Staub über Plasmabrenner zurückgeführt wird.

**Revendications**

1. Procédé pour obtenir de la fonte liquide ou un produit de préparation de l'acier, en utilisant des particules de matière première contenant de l'oxyde de fer, que l'on introduit par en-haut dans un lit fluidisé formé de particules solides contenant du carbone en suspension dans un gaz porteur qui contient de l'oxygène, le passage des particules de matière première à travers le lit fluidisé ayant pour effet d'assurer leur chauffauge, leur réduction et leur fusion, et le lit fluidisé recevant en outre un apport d'énergie par un chauffage au plasma; le procédé étant caractérisé en ce qu'on effectue l'apport d'énergie du plasma dans le lit fluidisé à hauteur de l'entrée du gaz porteur contenant de l'oxygène.

2. Procédé conforme à la revendication 1, caractérisé en ce qu'on utilise le gaz porteur contenant de l'oxygène pour constituer le gaz qui sert de siège pour le plasma.

3. Procédé conforme à la revendication 1 ou 2, caractérisé en ce qu'on effectue une réduction préalable des particules de matière première contenant de l'oxyde de fer dans un appareil de réduction (1), et en ce qu'on utilise le gaz de traitement sortant de cet appareil de réduction (1) pour constituer le gaz servant de siège au plasma, après l'avoir dépoussiéré et l'avoir débarrassé du $CO_2$ et de l'$H_2O$ qu'il contient.

4. Procédé conforme à la revendication 3, caractérisé en ce qu'on introduit le gaz de traitement dépoussiéré et débarrassé de 1'$H_2O$ et du $CO_2$ dans le lit fluidisé, à travers des brûleurs à plasma supplémentaires (16) ou des brûleurs à $O_2$ supplémentaires, à hauteur de l'entrée du gaz porteur contenant de l'oxygène dans le lit fluidisé, ou au-dessus du niveau de cette entrée.

5. Procédé conforme à l'une des revendications 1 à 4, caractérisé en ce qu'on fait passer dans un séparateur à cyclone (11) le gaz qui sort du lit fluidisé, pour le dépoussiérer, et en ce qu'on renvoie dans le lit fluidisé la poussière ainsi retenue, en l'injectant à travers des brûleurs.

6. Procédé conforme à la revendication 5, caractérisé en ce qu'on renvoie la poussière en l'injectant à travers des brûleurs à plasma.

**Claims**

1. Method for producing molten pig iron or steel prematerial from particles of raw material containing iron oxide, in which the latter are introduced from above into a fluidised bed constituted by particles of solid matter containing carbon and by an oxygenic carrier gas and are heated, reduced and smelted on migration through said bed, and in which the fluidised bed additionally receives energy by plasma heating, characterised in that the plasma energy is passed into the fluidised bed at the height at which the oxygenic carrier gas enters it.

2. Method according to claim 1, characterised in that the oxygenic carrier gas is used as plasma-forming gas.

3. Method according to claim 1 or 2, characterised in that the particles of raw material containing iron oxide are pre-reduced in a reduction unit (1) and that the process gas discharged from the reduction unit (1) is used as plasma-forming gas after dedusting and removal of $H_2O$ and $CO_2$.

4. Method according to claim 3, characterised in that after dedusting and $H_2O$ and $CO_2$ removal the process gas is passed into the fluidised bed via additional plasma torches (16) or oxygen torches level with, or above, the inlet for the oxygenic carrier gas.

5. Method according to one of claims 1 to 4, characterised in that the gas discharged from the fluidised bed is dedusted in a cyclone (11) and the dust thereby removed is returned via torches to the fluidised bed.

6. Method according to claim 5, characterised in that the dust is returned via plasma torches.

EP 0 236 669 B1